(19) **Europäisches Patentamt / European Patent Office / Office européen des brevets**

(11) **EP 2 789 667 B1**

(12) **EUROPEAN PATENT SPECIFICATION**

(45) Date of publication and mention of the grant of the patent:
**08.02.2017 Bulletin 2017/06**

(21) Application number: **12854658.7**

(22) Date of filing: **04.12.2012**

(51) Int Cl.:
*C09J 175/04* (2006.01)    *B60R 13/02* (2006.01)
*C09J 133/04* (2006.01)    *C09J 175/06* (2006.01)
*C08G 18/42* (2006.01)

(86) International application number:
**PCT/JP2012/081389**

(87) International publication number:
**WO 2013/084891 (13.06.2013 Gazette 2013/24)**

(54) **MOISTURE-CURABLE HOT MELT ADHESIVE**

FEUCHTIGKEITSHÄRTBARER HEISSSCHMELZKLEBER

ADHÉSIF THERMOFUSIBLE DURCISSABLE À L'HUMIDITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2011 JP 2011265982**

(43) Date of publication of application:
**15.10.2014 Bulletin 2014/42**

(73) Proprietor: **Henkel AG & Co. KGaA**
**40589 Düsseldorf (DE)**

(72) Inventor: **TAMOGAMI, Tsuyoshi**
**Minoo-shi**
**Osaka 562-8586 (JP)**

(56) References cited:
**WO-A1-2004/031296     JP-A- H0 517 736**
**JP-A- 2003 193 019     JP-A- 2005 023 181**
**JP-A- 2010 248 278     US-A1- 2006 025 555**

**Description**

Technical Field

The present invention relates to a moisture-curable hot melt adhesive. The present invention relates to a moisture-curable hot melt adhesive which is excellent in light resistance and durability, and is particularly suitable for automobile interior applications.

Background Art

A moisture-curable hot melt adhesive is employed in various fields such as building interior materials (or building materials) and electronic materials. The moisture-curable hot melt adhesive contains a urethane prepolymer having an isocyanate group at the end. Generally, the adhesive generates initial bonding by being applied to both adherends (or a base material and an adherend) in a hot molten state, and cooled and solidified, and then adhesive force and heat resistance of the adhesive are improved by moisture curing by cross-linking isocyanate groups with moisture in atmospheric air, and thus increasing molecular weight of the urethane prepolymer. It is required for the moisture-curable hot melt adhesive that it has high initial adhesive strength and does not cause decrease in adhesive strength even when it is exposed to severe conditions of high temperature and high humidity over a long time.

Patent Literature 1 discloses that a reactive (moisture-curable) hot melt adhesive obtained by the reaction of a polycarbonate based polyol with a polyisocyanate has improved initial adhesive force and heat-resistant adhesive force, and is excellent in thermal stability and moisture resistance (or water resistance) (see Examples of Patent Literature 1). In Patent Literature 2 and Patent Literature 3, reactive (moisture-curable) hot melt compositions are produced by reacting a mixed polyol of a polycarbonate polyol and a polyesterpolyol with a polyisocyanate (see Examples of Patent Literatures 2 and 3). As mentioned above, the polycarbonate polyol is a known polyol for producing a moisture-curable hot melt adhesive.

However, it is required for the moisture-curable hot melt adhesive to be excellent in not only initial adhesive force but also weatherability. In recent years, it is regarded as important that the moisture-curable hot melt adhesive is excellent in weatherability, especially light resistance. When the moisture-curable hot melt adhesive is used as the interior portions of houses and automobile interior materials, the cured moisture-curable hot melt adhesive may be turned yellow and deteriorated with the lapse of time due to sunlight (ultraviolet rays) transmitted through glass.

It is not intended to use the moisture-curable hot melt adhesives of Patent Literatures 1 to 3 for the interior portions of houses and automobile interior materials, and it is hard to say that the moisture-curable hot melt adhesives are sufficiently excellent in light resistance.

As mentioned above, there has recently been required a moisture-curable hot melt adhesive which is not only usable for outdoors, but also usable for the interior portions of houses and automobile interior materials. There is an urgent need to develop the moisture-curable hot melt adhesive which is less likely to be deteriorated under sunlight (ultraviolet rays) and high temperature and high humidity conditions, particularly, in the field of automobiles.

Patent Literature 1: JP 2-305882A
Patent Literature 2: JP 2005-023181A
Patent Literature 3: WO 2004/031296A1

Summary of Invention

Technical Problem

The present invention has been made so as to solve the problems, and an object thereof is to provide a moisture-curable hot melt adhesive which is excellent in light resistance, and durability against high temperature and high humidity.

Solution to Problem

The present inventors have intensively studied and found, surprisingly, that it is possible to obtain a moisture-curable hot melt adhesive which is excellent in light resistance and durability when a specific polyol is mixed with an acrylic based polymer and an isocyanate compound. Thus, the present invention has been completed.

That is, the present invention provides, in an aspect, a moisture-curable hot melt adhesive including a urethane prepolymer having an isocyanate group at the end, and an acrylic based polymer, wherein the urethane prepolymer contains chemical structures derived from a polycarbonate polyol and a non-crystalline polyesterpolyol.

The present invention provides, in an embodiment, the moisture-curable hot melt adhesive, wherein the acrylic based polymer has a chemical structure derived from a polymer of a (meth)acrylic acid ester.

The present invention provides, as a preferred embodiment, the moisture-curable hot melt adhesive which is used for producing an automobile interior material.

The present invention provides the moisture-curable hot melt adhesive, wherein the non-crystalline polyesterpolyol is obtainable by the reaction of an aliphatic diol with an aromatic dicarboxylic acid. The aliphatic diol preferably contains at least one selected from 2,4-diethyl-1,5-pentanediol and 2-ethyl-2-butyl-1,3-propanediol. The aromatic dicarboxylic acid preferably contains phthalic acid.

The present invention provides, in another aspect, an automobile interior material obtainable by applying the above moisture-curable reactive hot melt adhesive.

Effects of Invention

The moisture-curable hot melt adhesive of the present invention includes a urethane prepolymer having an isocyanate group at the end, and an acrylic based polymer, wherein the urethane prepolymer contains chemical structures derived from a polycarbonate polyol and a non-crystalline polyesterpolyol. Therefore, the adhesive is excellent in light resistance and is less likely to be deteriorated even under high temperature and high humidity, and also has high durability.

The moisture-curable hot melt adhesive of the present invention is excellent in light resistance and is less likely to be deteriorated even under high temperature and high humidity, and also has remarkably improved light resistance, since the acrylic based polymer has a chemical structure derived from a polymer of a (meth)acrylic acid ester.

Therefore, the moisture-curable hot melt adhesive of the present invention is preferably used for producing an automobile interior material.

The moisture-curable hot melt adhesive of the present invention is excellent in balance between light resistance and durability, since the non-crystalline polyesterpolyol is obtainable by the reaction of an aliphatic diol with an aromatic dicarboxylic acid.

Since the aliphatic diol contains at least one selected from 2,4-diethyl-1,5-pentanediol and 2-ethyl-2-butyl-1,3-propanediol, the alkyl group having two or more carbon atoms protects the ester bond, and thus light resistance of the moisture-curable hot melt adhesive is improved.

When the aromatic dicarboxylic acid contains phthalic acid, the ester bond is stabilized, and thus a moisture-curable hot melt adhesive which is excellent in balance between light resistance and durability can be obtained.

Since the automobile interior material of the present invention is obtainable by applying the above moisture-curable reactive hot melt adhesive, the moisture-curable hot melt adhesive is not deteriorated even under sunlight (ultraviolet rays), or under severe high temperature and high humidity conditions in the summer season, and thus no peeling occurs in automobiles over a long period.

Description of Embodiments

The moisture-curable hot melt adhesive according to the present invention includes a "urethane prepolymer having an isocyanate group at the end".

The "urethane prepolymer having an isocyanate group at the end" according to the present invention is usually a compound understood as a "urethane prepolymer", and has an isocyanate group at the end and also has chemical structures derived from a polycarbonate polyol and a non-crystalline polyesterpolyol.

The chemical structures derived from a polycarbonate polyol and a non-crystalline polyesterpolyol may be incorporated into the urethane prepolymer in any form as long as the objective moisture-curable hot melt adhesive can be obtained. That is, the chemical structures derived from a polycarbonate polyol and a non-crystalline polyesterpolyol may be substituted or not substituted with any substituent on any position.

The urethane prepolymer according to the present invention (hereinafter also referred to as a "urethane prepolymer") can be obtained by reacting a polyol containing a polycarbonate polyol and a non-crystalline polyesterpolyol with an isocyanate compound in accordance with a conventionally known method.

In the present invention, there is no particular limitation on the polycarbonate polyol, as long as the objective moisture-curable hot melt adhesive of the present invention can be obtained. Specific examples thereof include a polycarbonate polyol obtainable by reacting a polyol having 2 to 18 carbon atoms with a carbonate compound having 3 to 18 carbon atoms or phosgene, and a polycarbonate polyol obtainable by ring-opening polymerization of a cyclic carbonate compound having 3 to 18 carbon atoms with a polyol such as low-molecular polyol, polyetherpolyol, polyesterpolyol, or polycarbonate polyol.

Examples of the polyol having 2 to 18 carbon atoms include ethylene glycol, 1,3-propanediol, 1,4-butanediol, 1,5-pentanediol, 3-methyl-1,5-pentanediol, 1,6-hexanediol, 1,7-heptanediol, 1,8-octanediol, 1,9-nonanediol, 1,10-decanediol, 1,12-dodecanediol, diethylene glycol, triethylene glycol, neopentyl glycol, 2,2-dimethyl-1,3-propanediol, 2,4-diethyl-1,5-pentanediol, 3-methyl-1,5-pentanediol, 2-methyl-1,8-octandiol, 2-ethyl-2-butyl-1,3-propanediol, 1,3-cyclohexanedimethanol, 1,4-cyclohexanedimethanol, 1,4-cyclohexanediol, trimethylolethane, trimethylolpropane, and pentaerythritol.

Examples of the carbonate compound having 3 to 18 carbon atoms include dimethyl carbonate, diethyl carbonate, ethylene carbonate, and diphenyl carbonate.

In the present invention, the polycarbonate polyol containing a polyol having 4 to 12 carbon atoms as a constituent component thereof is preferable.

The polycarbonate polyol is more preferably an aliphatic polycarbonate polyol. The number average molecular weight (Mn) of the polyol is preferably from 400 to 10,000, and particularly preferably from 500 to 8,000.

These polycarbonate polyols may be used alone, or plural polycarbonates may be used.

The non-crystalline polyesterpolyol refers to a polyesterpolyol having no melting point.

The non-crystalline polyesterpolyol can be obtained by the reaction of a carboxylic acid with an aliphatic polyol. The carboxylic acid is roughly classified into an aromatic carboxylic acid and an aliphatic carboxylic acid.

Examples of the aromatic carboxylic acid include phthalic acid, trimellitic acid, and naphthalenedicarboxylic acid.

Examples of the aliphatic carboxylic acid include succinic acid, adipic acid, pimelic acid, suberic acid, and azelaic acid.

Examples of the aliphatic polyol include ethylene glycol, 1,2-propylene glycol, 1,3-propylene glycol, 1,4-butanediol, 1,5-pentanediol, 1,6-hexanediol, 1,7-heptanediol, 1,8-octanediol, 1,9-nonanediol, 1,10-decanediol, 1,12-dodecanediol, 3-methyl-1,5-pentanediol, 2-methyl-1,8-octanediol, 2,2-diethyl-1,3-propanediol, 2,2-diethyl-1,3-pentanediol, 2-ethyl-2-butyl-1,3-propanediol, 2,4-diethyl-1,5-pentanediol, 1,4-cyclohexanedimethanol, diethylene glycol, triethylene glycol, tetraethylene glycol, neopentyl glycol, trimethylolethane, trimethylolpropane, and pentaerythritol.

In the present invention, the non-crystalline polyesterpolyol is preferably obtainable by the reaction of an aliphatic diol with an aromatic dicarboxylic acid.

The aliphatic diol is preferably 2-methyl-1,8-octanediol, 2,2-diethyl-1,3-propanediol, 2,2-diethyl-1,3-pentanediol, 2-ethyl-2-butyl-1,3-propanediol, and 2,4-diethyl-1,5-pentanediol, and particularly preferably 2-ethyl-2-butyl-1,3-propanediol and 2,4-diethyl-1,5-pentanediol.

In the present invention, the aromatic dicarboxylic acid is preferably phthalic acid. As used herein, the term "phthalic acid" is a concept including an ortho-isomer, a meta-isomer, and a para-isomer of benzenedicarboxylic acid, and also includes isophthalic acid (meta-isomer) and terephthalic acid (para-isomer).

The aromatic dicarboxylic acid may also contain an acid anhydride. Examples of the acid anhydride include phthalic anhydride.

These aromatic dicarboxylic acid and aliphatic diol may be used alone, or may be mixed.

In the present invention, the number average molecular weight (Mn) of the non-crystalline polyesterpolyol is preferably from 400 to 10,000, and particularly preferably from 500 to 8,000.

The non-crystalline polyesterpolyol of the present invention may contain, as a constituent component thereof, 20% by weight or less of lactone such as caprolactone, and also may contain 10% by weight or less of oxyacid having 2 to 12 carbon atoms, such as hydroxypivalic acid.

The non-crystalline polyesterpolyol may be used alone or plural kinds thereof may be used in combination.

The urethane prepolymer according to the present invention may have a chemical structure derived from other polyols (for example, crystalline polyesterpolyol and polyetherpolyol etc.) as long as it has chemical structures derived from the polycarbonate polyol and the non-crystalline polyesterpolyol.

The crystalline polyesterpolyol generally refers to a compound understood as a crystalline polyesterpolyol, and more specifically refers to a polyesterpolyol having a melting point.

The melting point refers to a value measured by differential scanning calorimeter (DSC). By the differential scanning calorimeter, difference in calorie between a measurement sample and a standard reference material is measured and the melting point of the measurement sample is obtainable. Specifically, a peak top of an exothermic peak observed when the temperature is raised from -50°C to 150°C at a rate of 10°C/minute was regarded as the melting point.

The non-crystalline polyesterpolyol is easily distinguished from the crystalline polyesterpolyol by DSC. The melting point of the crystalline polyesterpolyol is observed as an exothermic peak during the temperature rise by the measurement of DSC, and is observed as an endothermic peak during the temperature fall.

Since the melting point of the non-crystalline polyesterpolyol is not clearly observed when measured by DSC, it is possible to distinguish the non-crystalline polyesterpolyol from the crystalline polyesterpolyol.

In general, the crystalline polyesterpolyol is white opaque in a solid state, whereas the non-crystalline polyesterpolyol is transparent.

The polyetherpolyol includes, for example, polyoxytetramethylene glycol (PTMG), polyoxypropylene glycol (PPG), and polyoxyethylene glycol (PEG). The polyetherpolyol is particularly preferably polyoxypropylene glycol.

There is no particular limitation on the isocyanate compound in the present invention, as long as the objective urethane prepolymer can be obtained, and an isocyanate compound which is used in conventional production of a polyurethane may be used. The isocyanate compound preferably has 1 to 3 isocyanate groups per molecule on average, and is particularly preferably a difunctional isocyanate compound, so-called diisocyanate compound. These isocyanate compounds can be used alone, or two or more isocyanate compounds can be used in combination.

Examples of the "isocyanate compound" include ethylene diisocyanate, ethylidene-diisocyanate, propylene diisocyanate, butylene-diisocyanate, hexamethylenediisocyanate, toluene-diisocyanate, cyclopentylene-1,3-diisocyanate, cyclohexylene-1,4-diisocyanate, cyclohexylene-1,2-diisocyanate, 4,4'-diphenylmethane diisocyanate, 2,2'-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulfone-4,4'-diisocyanate, dichlorohexamethylene diisocyanate, furfurylidene diisocyanate, and 1-chlorobenzene-2,4-diisocyanate. These isocyanate compounds can be used alone or in combination.

In the case of producing the "urethane prepolymer" according to the present invention, a monool and a monoisocyanate can be used, and also a trifunctional polyol and a trifunctional isocyanate can be used as long as the objective urethane prepolymer can be obtained. It is preferred to produce the urethane prepolymer using a difunctional polyol (diol) and a difunctional isocyanate (diisocyanate).

It is more preferred that the "urethane prepolymer" is produced by reacting the difunctional polyol with the difunctional isocyanate from the viewpoint of control of thermal stability and a production method (and a production process thereof) of the obtained moisture-curable hot melt adhesive. It is preferred to use 2 mol of the difunctional isocyanate based on 1 mol of the difunctional polyol since the objective urethane prepolymer can be produced comparatively easily.

The moisture-curable hot melt adhesive according to the present invention is produced by mixing the above-mentioned "urethane prepolymer" with an acrylic based polymer.

Specifically, the moisture-curable hot melt adhesive may be produced by mixing the "urethane prepolymer" produced in advance with the acrylic based polymer, or the moisture-curable hot melt adhesive may be produced by mixing a polyol and an isocyanate compound, which are precursors of the urethane prepolymer, with the acrylic based polymer, and by reacting the polyol with the isocyanate compound.

In the present invention, the acrylic based polymer is generally called an acrylic based polymer and has a chemical structure derived from a polymer of (meth)acrylic acid ester, and is not particularly limited as long as the objective moisture-curable hot melt adhesive of the present invention can be obtained. The chemical structure derived from a polymer of (meth)acrylic acid ester may be incorporated into the acrylic based polymer in any form as long as the objective moisture-curable hot melt adhesive can be obtained. That is, the chemical structure derived from a polymer of (meth)acrylic acid may be substituted or not substituted with any substituent on any position.

The acrylic based polymer is a polymer of (meth)acrylic acid, (meth)acrylic acid ester, (meth)acrylic acid amide and a derivative thereof ((meth)acrylic acid derivative), and may be either a homopolymer or a copolymer.

Herein, acrylic acid and methacrylic acid are also collectively referred to as "(meth)acrylic acid", "acrylic acid ester and methacrylic acid ester" are also collectively referred to as "(meth)acrylic acid ester" or "(meth)acrylate", and an acrylic acid derivative and a methacrylic acid derivative are also collectively referred to as a (meth)acrylic acid derivative. Furthermore, "acrylamide and methacrylamide" are also collectively referred to as "(meth)acrylic acid amide".

Since a vinyl ester having a structure in which a vinyl group and oxygen are bonded, for example, vinyl acetate is not included in the (meth)acrylate, it does not correspond to the acrylic based polymer of the present invention.

The (meth)acrylic acid ester is preferably a (meth)acrylic acid alkyl ester. Specific examples of the (meth)acrylic acid alkyl ester include n-hexyl (meth)acrylate, n-octyl (meth)acrylate, 2-ethylhexyl (meth)acrylate, decyl (meth)acrylate, dodecyl (or lauryl) (meth)acrylate, stearyl (meth)acrylate, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, and 2-hydroxyethyl (meth)acrylate.

Examples of the (meth)acrylic acid derivative include N-hexylacrylic acid amide, N-octylacrylic acid amide, N,N-dimethylacrylic acid amide, N-butylacrylic acid amide and N-propylacrylic acid amide, and acrylonitrile and methacrylonitrile.

The alkyl group may have a chain-like structure (for example, methyl, ethyl, and propyl), or may have either a linear structure (for example, n-hexyl, n-octyl, n-propyl, and n-butyl) or a branched structure (for example, 2-ethylhexyl, isobutyl, and t-butyl), or may have a substituent (for example, hydroxyl group, amino group, carboxyl group, glycidyl group, (meth)acryloyl group, and methoxy group) or not. The alkyl group preferably has a hydroxyl group.

In a preferred embodiment of the present invention, the acrylic based polymer preferably has a chemical structure derived from a polymer of (meth)acrylic acid ester, and the (meth)acrylic acid ester is particularly preferably at least one selected from methyl (meth)acrylate, n-butyl (meth)acrylate, isobutyl (meth)acrylate, t-butyl (meth)acrylate, and 2-hydroxyethyl (meth)acrylate.

Among these (meth)acrylic acid esters, at least one selected from methyl methacrylate, n-butyl acrylate, and 2-hydroxyethyl methacrylate is particularly preferable. In the present invention, the acrylic based polymer in most preferable embodiment is a copolymer of methyl methacrylate, 2-hydroxyethyl methacrylate, and n-butyl acrylate, to which ISOCRYL H270 manufactured by INEOS Acrylics, Inc. corresponds.

The method for producing the acrylic based polymer can be used without any particular limitation as long as it is a method capable of obtaining the objective moisture-curable hot melt adhesive of the present invention. Usually, the acrylic based polymer can be produced using solution polymerization, bulk polymerization, and suspension polymerization.

The weight average molecular weight (Mw) of the acrylic based polymer is preferably from 2,000 to 40,000, particularly preferably from 2,500 to 35,000, and most preferably from 2,500 to 30,000.

As used herein, the weight average molecular weight (Mw) refers to a value measured by gel permeation chromatography (GPC), followed by conversion even when it is Mw of the polyol or Mw of the other components. More specifically, the Mw refers to a value measured by using the below-mentioned GPC apparatus and measuring method, and converted. 600E manufactured by Waters Corporation was used as a GPC apparatus, and RI (Waters410) was used as a detector. Two LF-804 manufactured by Shodex were used as a GPC column. A sample was dissolved in tetrahydrofuran and the obtained solution was allowed to flow at a flow rate of 1.0 ml/min and the column temperature of 40°C, and then the Mw was determined by conversion (or modification) of the molecular weight measured using a calibration curve which is obtained by using polystyrene having a monodisperse molecular weight as a standard reference material.

In the present invention, the amount of the polycarbonate polyol is preferably from 40 to 80 parts by weight, and particularly preferably from 50 to 70 parts by weight, based on 100 parts by weight of the total weight of the polycarbonate polyol, the non-crystalline polyesterpolyol and the acrylic based polymer. When the amount of the polycarbonate polyol is within the above range, it is possible to obtain a moisture-curable hot melt adhesive which is excellent in balance between light resistance and durability against high temperature and high humidity.

The melt viscosity at 120°C of the moisture-curable hot melt adhesive of the present invention is preferably from 3,000 mPa·s to 10,000 mPa·s, more preferably from 4,000 mPa·s to 80,000 mPa·s, and particularly preferable 5,000 mPa·s to 9,000 mPa·s.

When the melt viscosity at 120°C of the moisture-curable hot melt adhesive of the present invention is from 3,000 mPa·s to 10,000 mPa·s, it becomes easy to apply the adhesive to automobile interior materials.

Herein, the melt viscosity at 120°C refers to a value obtained by measuring the viscosity at 120°C using Brookfield viscometer (manufactured by Brookfield Viscometers Ltd.) after melting the moisture-curable hot melt adhesive at 120°C. When the viscosiry was measured, a rotor No. 27 was used.

The moisture-curable hot melt adhesive according to the present invention can contain other additives as long as the additives do not exert an adverse influence on the reaction of the polyol with the isocyanate compound to form the urethane prepolymer, and the objective moisture-curable hot melt adhesive of the present invention can be obtained. There is no particular limitation on timing of the addition of the additives to the moisture-curable hot melt adhesive, as long as the objective moisture-curable hot melt adhesive of the present invention can be obtained. The additives may be added, for example, together with the polyol and the isocyanate compound in the case of synthesizing the urethane prepolymer. Alternatively, first, the polyol may be reacted with the isocyanate compound to synthesize the urethane prepolymer, and then the additives may be added.

The "additives" are usually used in the moisture-curable hot melt adhesive and there is no particular limitation, as long as the objective moisture-curable hot melt adhesive of the present invention can be obtained. Examples of the additives include plasticizers, antioxidants, pigments, ultraviolet absorbers, photostabilizers, flame retardants, catalysts, and waxes.

Examples of the "plasticizer" include dioctyl phthalate, dibutyl phthalate, dioctyl adipate, and mineral spirit.

Examples of the "antioxidant" include phenol based antioxidants, phosphate based antioxidants, thioether based antioxidants, and amine based antioxidants.

Examples of the "pigment" include titanium oxide and carbon black.

Examples of the "ultraviolet absorber" include benzotriazole, hindered amine, benzoate, and hydroxyphenyltriazine.

Examples of the "flame retardant" include halogen based flame retardants, phosphorous based flame retardants, antimony based flame retardants, and metal hydroxide based flame retardants.

Examples of the "catalyst" include metal based catalysts such as tin based catalysts (trimethyltin laurate, trimethyltin hydroxide, dibutyltin dilaurate, and dibutyltin maleate), lead based catalysts (lead oleate, lead naphthenate, and lead octoate), and other metal based catalysts (naphthenic acid metal salts such as cobalt naphthenate) and amine based catalysts such as triethylenediamine, tetramethylethylenediamine, tetramethylhexylenediamine, diazabicycloalkenes, and dialkylaminoalkylamines.

Examples of the "wax" include waxes such as paraffin wax and microcrystalline wax.

The automobile interior material according to the present invention is generally produced by bonding a base material and an adherend through the above moisture-curable hot melt adhesive. For example, in the case of bonding the adherend to a plastic material as a base material, the moisture-curable hot melt adhesive may be applied to the base material side and/or the adherend side.

In the present invention, there is no particular limitation on the "adherend" of the automobile interior material, and a fibrous material is preferable. The fibrous material is obtained by knitting a synthetic fiber or a natural fiber using a spinning machine to form a sheet.

In the present invention, there is no particular limitation on the "base material" of the automobile interior material, and a thermoplastic resin is preferable. Examples of the thermoplastic resin include:

heat-resistant polystyrene based resins such as a styrene-acrylic acid copolymer, a styrene-maleic anhydride copolymer, and a styrene-itaconic acid copolymer;
modified PPE based resins such as a resin mixture of a PPE based resin and a PS based resin, and a styrene-phenylene ether copolymer such as a styrene graft polymer of PPE;
polycarbonate resins; and
polyester based resins such as polybutylene terephthalate and polyethylene terephthalate.

These resins can be used alone, or two or more kinds thereof can be used in combination.

The thermoplastic resin serving as the base material is preferably polyethylene terephthalate, and polyethylene terephthalate may be in the form of either a non-foamed body or a foamed body.

It is not necessary to use a special apparatus so as to produce the automobile interior material of the present invention, and the automobile interior material can be produced using generally known production apparatuses including a conveyor, a coater, a press machine, a heater, and a cutter.

While allowing a base material and an adherend to flow on a conveyer, the base material or adherend is coated with the moisture-curable hot melt adhesive according to the present invention using a coater. The temperature at the time of applying is controlled to a predetermined temperature by a heater. The adherend and the base material are bonded to each other through the moisture-curable hot melt adhesive by slightly pressing the adherend against the base material using a press. Then, the laminated adherend and base material are left standing to cool and allowed to flow as they are, thereby solidifying the moisture-curable hot melt adhesive. Then, the base material laminated with the adherend is cut into an appropriate size by a cutter.

In the automobile interior material of the present invention, deterioration of the moisture-curable hot melt adhesive is not caused by sunlight transmitted through glass or high temperature in the summer season, and thus it is less likely to cause peeling between the base material and the adherend even in the summer season.

Main embodiments of the present invention are shown below.

1. A moisture-curable hot melt adhesive including:

a urethane prepolymer having an isocyanate group at the end, and
an acrylic based polymer, wherein

the urethane prepolymer contains chemical structures derived from a polycarbonate polyol and a non-crystalline polyesterpolyol.

2. The moisture-curable hot melt adhesive according to the above 1, wherein the acrylic based polymer has a chemical structure derived from a polymer of (meth)acrylic acid ester.

3. The moisture-curable hot melt adhesive according to the above 1 or 2, which is used for producing an automobile interior material.

4. The moisture-curable hot melt adhesive according to any one of the above 1 to 3, wherein the non-crystalline polyesterpolyol is obtainable by the reaction of an aliphatic diol with an aromatic dicarboxylic acid.

5. The moisture-curable hot melt adhesive according to the above 4, wherein the aliphatic diol contains at least one selected from 2,4-diethyl-1,5-pentanediol and 2-ethyl-2-butyl-1,3-propanediol.

6. The moisture-curable hot melt adhesive according to the above 4 or 5, wherein the aromatic dicarboxylic acid contains phthalic acid.

7. An automobile interior material obtainable from the moisture-curable reactive hot melt adhesive according to any one of the above 1 to 6.

[Examples]

The present invention will be described below by way of Examples and Comparative Examples. However, the present invention is not limited to these Examples as long as the present invention does not depart from the scope of the present invention.

Components of moisture-curable hot melt adhesives used in Examples and Comparative Examples are shown below.

<Polycarbonate Polyol>

Polycarbonate diol A (DURANATE T4692 (product name) manufactured by Asahi Kasei Chemicals Corporation, hydroxyl value of 56 (mgKOH/g), number average molecular weight (Mn) of 2,000, polycarbonate polyol produced from 1,4-butanediol and 1,6-hexanediol)
Polycarbonate diol B (DURANATE T5652 (product name) manufactured by Asahi Kasei Chemicals Corporation, hydroxyl value of 56 (mgKOH/g), weight average molecular weight (Mw) of 2,000, polycarbonate diol produced from 1,5-pentanediol and 1,6-hexanediol)

<Polyesterpolyol>

Non-crystalline polyesterpolyol A (PES-A (product name) manufactured by Henkel Japan Ltd., hydroxyl value of 57.5 (mgKOH/g), number average molecular weight (Mn) of 2,000, polyesterpolyol produced from 2-butyl-2-ethyl-1,3-propanediol and phthalic acid)
Non-crystalline polyesterpolyol B (HS 2N-226P (product name) manufactured by HOKOKU Co., Ltd., hydroxyl value of 56 (mgKOH/g), number average molecular weight (Mn) of 2,000, polyesterpolyol produced from 2,4-diethyl-1,5-pentanediol and phthalic acid)
Crystalline polyesterpolyol (HS 2H-351A (product name) manufactured by HOKOKU Co., Ltd., hydroxyl value of 56 (mgKOH/g), number average molecular weight (Mn) of 3,500, polyesterpolyol produced from 1,6-hexanediol and adipic acid)

<Polyetherpolyol>

Polypropylene glycol (HIFLEX D2000 (product name) manufactured by Dai-ichi Kogyo Seiyaku Co., Ltd., hydroxyl value of 56 (mgKOH/g), number average molecular weight (Mn) of 2,000)

<Acrylic Based Polymer>

Copolymer of methyl methacrylate (MMA), 2-hydroxyethyl methacrylate (2HEMA) and butyl acrylate (BA) (ISOCRYL H-270 (product name) manufactured by INEOS Acrylics, Inc., hydroxyl value of 13 (mgKOH/g), weight average molecular weight (Mw) of 27,000)
Homopolymer of butyl acrylate (BA) (ARUFON UP1000 (product name) manufactured by Toagosei Co., Ltd., weight average molecular weight (Mw) of 3,000)

<Other Thermoplastic Resins>

Ethylene-vinyl acetate resin (EVA resin) (ULTRACEN 726-2 (product name) manufactured by TOSOH CORPORATION, vinyl acetate content of 31%, melt index of 700 (g/10 minutes at 190°C))

<Isocyanate Compound>

Xylylene diisocyanate (TAKENATE 500 (product name) manufactured by Mitsui Chemicals, Inc.)

<Additives>

Ultraviolet absorber (TINUVIN 479 (product name) manufactured by BASF Corporation, hydroxytriazine based ultraviolet absorber)
Antioxidant 1 (ADEKASTAB AO-50(product name) manufactured by ADEKA Corporation, phenol based antioxidant)
Antioxidant 2 (EVERSORB 93 (product name) manufactured by Everlight Chemical Industrial Co., amine based antioxidant)

<Synthesis of Non-Crystalline Polyesterpolyol A>

In a reaction vessel, 345.6 g of 2-butyl-2-ethyl-1,3-propanediol and 296 g of phthalic acid were charged and 0.2 g of zinc acetate was charged as a catalyst. The mixture was heated to 220°C over 2 hours and stirred under normal pressure for 1 hour, thereby allowing the mixture to undergo a reaction. Distillation of water was confirmed and the reaction was carried out under reduced pressure for 5 hours, and then removal of a predetermined amount of water to obtain a polyesterpolyol (PES-A). The hydroxyl value was measured in accordance with JIS K1557-1 and found to be 57.5 mgKOH/g.

<Production of Moisture-Curable Hot Melt Adhesive>

Examples 1 to 10 and Comparative Examples 1 to 7

According to the formulations shown in Table 1 and Table 2, raw materials were mixed to produce moisture-curable hot melt adhesives.
Specifically, all raw materials except for an isocyanate compound were charged in a reaction vessel, heated to 120°C and then stirred under reduced pressure for 1 hour. After removal of moisture, the isocyanate compound (xylylene diisocyanate) was added at the same temperature, followed by stirring under reduced pressure for 2 hours to obtain the moisture-curable hot melt adhesives.
An ultraviolet irradiation test was carried out so as to evaluate light resistance of the moisture-curable hot melt adhesives of Examples and Comparative Examples. Moreover, a high pressure cocker test as an acceleration test was carried out so as to evaluate durability against high temperature and high humidity.
In order to evaluate coatability, the viscosity was measured.
The test procedures and evaluation criteria are shown below.

<Evaluation of Light Resistance (Measurement of Color Difference)>

Production of test piece

An adhesive was uniformly applied to a hiding test paper (JIS) in a thickness of 200 $\mu$m and then aged at room temperature for 3 days to cure.
Using a fade meter (manufactured by Suga Test Instruments Co., Ltd.), the white portion of the cured adhesive/hiding test paper was irradiated with ultraviolet rays at 83°C for 200 hours.
Before and after irradiation, color difference ($\Delta$b value) was measured by a color-difference meter (Glossmeter VG700, manufactured by Nippon Denshoku Industries Co., Ltd.).
Color difference was evaluated as follows.

A: $\Delta$b value is less than 4.
B: $\Delta$b value is 4 or more and less than 6.
C: $\Delta$b value is 6 or more and less than 10.
D: $\Delta$b value is 10 or more.

<Evaluation of Light Resistance (Calculation of Peel Strength Retention Ratio)>

Production of test piece

An adhesive was spray-applied to a polyethylene terephthalate (PET) foam in a coating amount of 15 g/m$^2$ and then a PET cloth was laid thereon, followed by pressing at 60°C under 0.2 MPa for 30 seconds to produce a laminated test piece. In the same manner as in the measurement of the color difference, the thus laminated and bonded test piece was irradiated with ultraviolet rays at 83°C for 200 hours using the fade meter (manufactured by Suga Test Instruments Co., Ltd.).

Before and after irradiation, peel strength was measured and then a strength retention ratio was calculated. The peel strength was measured by a T-type peel test at a testing speed of 100 mm/minute, using a tensile tester (SC-50NM-S0, manufactured by JT Torshi Co., LTD.).

The strength retention ratio was evaluated as follows.

$$\text{Strength retention ratio (\%)} = [\text{peel strength after irradiation/peel strength before irradiation}] \times 100$$

A: Strength retention ratio is 80% or more.
B: Strength retention ratio is less than 80%.

<Evaluation of Durability against High Temperature and High Humidity (High Pressure Cocker Test)>

Production of test piece

An adhesive was uniformly applied to an aluminum sheet in a thickness of 200 $\mu$m and then cured by aging at room temperature for 3 days. The thus cured adhesive/aluminum sheet was put in an autoclave (Autoclave SP300, manufactured by Yamato Scientific Co., Ltd.) and then a high pressure cocker test was carried out.

In the high pressure cocker test, loading of a temperature of 120°C and an inner pressure of 1.1 MPa (total pressure of atmospheric pressure of 1.0 MPa and vapor pressure of 0.1 MPa) was applied to the test piece for 24 hours.

Thereafter, the test piece was taken out and the surface condition was confirmed after digging the nail into the test piece.

A: There is no difference in surface condition before and after test.
B: After test, the surface is softened, and thus easily digging the nail into the test piece.

<Measurement of Viscosity>

In the measurement of viscosity, a viscometer (manufactured by Brookfield Viscometers Ltd.) was used and a rotor No. 27 was used. A specified amount (10.5 g) of a molten moisture-curable hot melt adhesive was poured into a viscosity tube and the rotor was inserted into the viscometer. After being left to stand at 120°C for 30 minutes, melt viscosity was measured at 120°C.

Table 1

|  | 1 | 2 | 3 | 4 | 5 | 6 | 7 | 8 | 9 | 10 |
|---|---|---|---|---|---|---|---|---|---|---|
| Polycarbonate polyol<br>Polycarbonate diol A | 40.0 | 40.0 |  |  |  |  |  |  | 50.0 | 50.0 |
| Polycarbonate diol B |  |  | 40.0 | 40.0 | 50.0 | 60.0 | 70.0 | 60.0 |  |  |
| Polyesterpolyol<br>Non-crystalline polyesterpolyol A | 40.0 |  | 40.0 |  |  |  |  |  |  |  |
| Non-crystalline polyesterpolyol B |  | 40.0 |  | 40.0 | 30.0 | 20.0 | 20.0 | 30.0 | 30.0 | 30.0 |
| Crystalline polyesterpolyol |  |  |  |  |  |  |  |  |  |  |
| Polyetherpolyol<br>Polypropylene glycol |  |  |  |  |  |  |  |  |  |  |
| Acrylic based polymer<br>Copolymer of BA,MMA,2HEMA | 20.0 | 20.0 | 20.0 | 20.0 | 20.0 | 20.0 | 10.0 | 10.0 |  | 10.0 |

(continued)

|  | 1 | 2 | 3 | 4 | 5 | 6 | 7 | 8 | 9 | 10 |
|---|---|---|---|---|---|---|---|---|---|---|
| Homopolymer of BA |  |  |  |  |  |  |  |  | 20.0 | 10.0 |
| Other thermoplastic resins<br>Ethylene-vinyl acetate resin |  |  |  |  |  |  |  |  |  |  |
| Isocyanate compound<br>Xylylene diisocyanate | 15.0 | 15.0 | 15.0 | 15.0 | 15.0 | 15.0 | 16.0 | 16.0 | 14.0 | 14.0 |
| Additives<br>Ultraviolet absorber | 1 | 1 | 1 | 1 | 1 | 1 | 1 | 1 | 1 | 1 |
| Antioxidant 1 | 0.2 | 0.2 | 0.2 | 0.2 | 0.2 | 0.2 | 0.2 | 0.2 | 0.2 | 0.2 |
| Antioxidant 2 | 0.2 | 0.2 | 0.2 | 0.2 | 0.2 | 0.2 | 0.2 | 0.2 | 0.2 | 0.2 |
| Evaluation |  |  |  |  |  |  |  |  |  |  |
| Melt viscosity at 120°C | 6500 | 6300 | 6500 | 6100 | 6200 | 5900 | 5800 | 6000 | 3300 | 4800 |
| Light resistance<br>Color difference (△b) | B | B | B | B | B | A | A | B | B | A |
| Peel strength retention ratio | A | A | A | A | A | A | A | A | A | A |
| Durability against high temperature and high humidity<br>State of film | A | A | A | A | A | A | A | A | A | A |

Table 2

|  | Comparative Examples | | | | | | |
|---|---|---|---|---|---|---|---|
|  | 1 | 2 | 3 | 4 | 5 | 6 | 7 |
| Polycarbonate polyol<br>Polycarbonate diol A |  |  | 50.0 |  |  |  |  |
| Polycarbonate diol B |  | 40.0 |  | 50.0 | 40.0 | 40.0 |  |
| Polyesterpolyol<br>Non-crystalline polyesterpolyol A |  |  |  |  |  |  |  |
| Non-crystalline polyesterpolyol B | 80.0 | 60.0 | 20.0 | 30.0 |  | 40.0 |  |
| Crystalline polyesterpolyol |  |  | 30.0 | 20.0 | 40.0 |  |  |
| Polyetherpolyol<br>Polypropylene glycol |  |  |  |  |  |  | 66.0 |
| Acrylic based polymer<br>Copolymer of BA,MMA,2HEMA | 20.0 |  |  |  | 20.0 |  | 34.0 |
| Homopolymer of BA |  |  |  |  |  |  |  |
| Other thermoplastic resins<br>Ethylene-vinyl acetate resin |  |  |  |  |  | 20.0 |  |
| Isocyanate compound<br>Xylylene diisocyanate | 15.0 | 17.0 | 15.0 | 16.0 | 14.0 | 15.0 | 17.0 |
| Additives |  |  |  |  |  |  |  |

(continued)

| | Comparative Examples | | | | | | |
|---|---|---|---|---|---|---|---|
| | 1 | 2 | 3 | 4 | 5 | 6 | 7 |
| Ultraviolet absorber | 1 | 1 | 1 | 1 | 1 | 1 | 1 |
| Antioxidant 1 | 0.2 | 0.2 | 0.2 | 0.2 | 0.2 | 0.2 | 0.2 |
| Antioxidant 2 | 0.2 | 0.2 | 0.2 | 0.2 | 0.2 | 0.2 | 0.2 |
| Evaluation | | | | | | | |
| Melt viscosity at 120°C | 4300 | 3200 | 5500 | 6300 | 6100 | -a) | 4200 |
| LiGht resistance Color difference ($\Delta$b) | D | C | B | B | A | - | B |
| Peel strength retention ratio | A | A | B | B | B | - | B |
| Durability aGainst high temperature and high humidity State of film | A | A | B | B | B | - | B |
| The symbol "-a)" denotes "unevaluable" because of poor compatibility. | | | | | | | |

As shown in Table 1, the moisture-curable hot melt adhesives of Examples 1 to 10 are synthesized from three components of a polycarbonate polyol, a non-crystalline polyesterpolyol, and an acrylic based polymer, and are therefore excellent in light resistance and also excellent in durability against high temperature and high humidity. The moisture-curable hot melt adhesives of Examples are also excellent in coatability since the melt viscosity at 120°C is not so high.

As shown in Table 2, when compared with the moisture-curable hot melt adhesives of Examples, the moisture-curable hot melt adhesives of Comparative Examples 1 to 7 are synthesized in a state of lacking any one of the above-mentioned three components, and are therefore inferior in light resistance or durability.

As mentioned above, it was proved that three components of a polycarbonate polyol, a non-crystalline polyesterpolyol, and an acrylic based polymer are required so as to produce a moisture-curable hot melt adhesive which is excellent in light resistance and durability.

[Industrial Applicability]

The present invention provides a moisture-curable hot melt adhesive and an automobile interior material.

The moisture-curable hot melt adhesive according to the present invention is excellent in light resistance and durability, and thus it is useful for automobile interior material applications.

In the automobile interior material according to the present invention, peeling between a base material and an adherend does not occur even when severe conditions of high temperature and high humidity continue over a long period.

**Claims**

1.  A moisture-curable hot melt adhesive comprising:

    a urethane prepolymer having an isocyanate group at the end, and
    an acrylic based polymer, wherein

    the urethane prepolymer contains chemical structures derived from a polycarbonate polyol and a non-crystalline polyesterpolyol,
    wherein the non-crystalline polyesterpolyol is a polyesterpolyol having no melting point.

2.  The moisture-curable hot melt adhesive according to claim 1, wherein the acrylic based polymer has a chemical structure derived from a polymer of a (meth)acrylic acid ester.

3.  The moisture-curable hot melt adhesive according to claim 1 or 2, which is used for producing an automobile interior material.

**4.** An automobile interior material obtainable by applying the moisture-curable hot melt adhesive according to any one of claims 1 to 3.

**Patentansprüche**

**1.** Feuchtigkeitshärtender Schmelzklebstoff umfassend:

ein Urethan-Präpolymer mit einer Isocyanatgruppe am Ende und
ein Polymer auf Acrylbasis, wobei

das Urethan-Präpolymer chemische Strukturen enthält, die von einem Polycarbonatpolyol und einem nichtkristallinen Polyesterpolyol abgeleitet sind,
wobei es sich bei dem nichtkristallinen Polyesterpolyol um ein Polyesterpolyol ohne Schmelzpunkt handelt.

**2.** Feuchtigkeitshärtender Schmelzklebstoff nach Anspruch 1, wobei das Polymer auf Acrylbasis eine chemische Struktur aufweist, die von einem Polymer eines (Meth)acrylsäureesters abgeleitet ist.

**3.** Feuchtigkeitshärtender Schmelzklebstoff nach Anspruch 1 oder 2, der zum Herstellen eines Automobilinnenmaterials verwendet wird.

**4.** Automobilinnenmaterial, das durch Anwenden des feuchtigkeitshärtenden Schmelzklebstoffs nach einem der Ansprüche 1 bis 3 erhältlich ist.

**Revendications**

**1.** Adhésif thermofusible durcissable à l'humidité comprenant :

un prépolymère d'uréthane ayant un groupe isocyanate à l'extrémité, et
un polymère à base d'acrylique,

le prépolymère d'uréthane contenant des structures chimiques dérivées d'un polycarbonate polyol et d'un polyester polyol non cristallin,
le polyester polyol non cristallin étant un polyester polyol sans point de fusion.

**2.** Adhésif thermofusible durcissable à l'humidité selon la revendication 1, dans lequel le polymère à base d'acrylique a une structure chimique dérivée d'un polymère d'un ester (méth)acrylique.

**3.** Adhésif thermofusible durcissable à l'humidité selon la revendication 1 ou 2, qui est utilisé pour la production d'un matériau d'intérieur d'automobile.

**4.** Matériau d'intérieur d'automobile pouvant être obtenu par application de l'adhésif thermofusible durcissable à l'humidité selon l'une quelconque des revendications 1 à 3.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2305882 A
- JP 2005023181 A

- WO 2004031296 A1